# EUROPÄISCHE PATENTANMELDUNG

(11) **EP 1 577 133 A2**
(43) Veröffentlichungstag der Anmeldung: **21.09.2005**
(21) Anmeldenummer: 05004931.1
(22) Anmeldetag: 07.03.2005
(51) Int. Cl.: B60J 1/00

(54) **Kraftfahrzeugscheiben, Schutzfolien und Aufdrucke sowie jeweils Herstellungsverfahren dafür**

(30) Priorität: 05.03.2004 DE 202004003469 U
(71) Anmelder: Inova GmbH Technische Entwicklungen, 65428 Rüsselsheim (DE)
(72) Erfinder: Müller, Olaf, 65428 Rüsselsheim (DE)
(74) Vertreter: Lindner, Manfred Klaus

(57) **Zusammenfassung**

Die Erfindung betrifft eine Kraftfahrzeugscheibe, insbesondere eine heizbare Kraftfahrzeug-Heckscheibe, aus thermoplastischem Material, wobei wenigstens bereichsweise zumindest eine Schutzfolie auf dem thermoplastischen Material aufgebracht ist, und wobei entweder wenigstens ein Heizleiter und/oder eine Antenne auf die Schutzfolie aufgedruckt oder aufgebracht ist oder in die Schutzfolie eingelegt ist, oder das thermoplastische Material mit stromleitendem Material versehen ist, das bei Stromdurchgang die Schutzfolie und/oder das thermoplastische Material erwärmt. Weiterhin betrifft die Erfindung eine Kraftfahrzeugscheibe, insbesondere heizbare Kraftfahrzeug-Heckscheibe, aus thermoplastischem Material, wobei auf dem thermoplastischen Material wenigstens ein Heizleitersystem aufgedruckt oder anderweitig aufgebracht ist, und wobei das Heizleitersystem mit einem Schutzlack versiegelt ist. Ferner betrifft die Erfindung eine entsprechende Schutzfolie und einen entsprechenden Aufdruck sowie Scheiben und Platten mit einem Oberflächenschutz hauptsächlich aus Folien oder Schutzlack. Die entsprechenden Herstellungsverfahren sind ebenfalls Gegenstand der Erfindung.

## Beschreibung

Die Erfindung betrifft Kraftfahrzeugscheiben, wie beispielsweise heizbare Kraftfahrzeug-Heckscheiben, insbesondere für Cabriolets, aber auch Dach-, Front- und Seitenscheiben, Schutzfolien und Aufdrucke dafür sowie jeweils Herstellungsverfahren für solche Scheiben.

Heizbare Heckscheiben aus Glas sind Stand der Technik.

Inzwischen werden, wie in der Praxis bekannt wurde, vorwiegend bei Cabriolets Heckscheiben aus gegossenen Thermoplasten (vorzugsweise Polycarbonat) eingesetzt, seitdem man in der Lage ist, diese Thermoplaste kratz- und alterungsfest (insbesondere UV-fest) zu beschichten.

Die Herstellung einer heizbaren Heckscheibe aus Thermoplasten ist bisher nicht möglich, da Thermoplaste im Gegensatz zu Glasscheiben schlechte Wärmeleiter sind.

Die vorliegende hat und erreicht das Ziel, diesem Mangel abzuhelfen, wie durch die nachfolgenden prinzipiellen Erfindungsvarianten und -aspekte angegeben ist:
1. Kraftfahrzeugscheibe, insbesondere heizbare Kraftfahrzeug-Heckscheibe, aus thermoplastischem Material, dadurch gekennzeichnet, dass wenigstens bereichsweise zumindest eine Schutzfolie auf dem thermoplastischen Material aufgebracht ist, und dass wenigstens ein Heizleiter und/oder eine Antenne auf die Schutzfolie aufgedruckt oder aufgebracht ist oder in die Schutzfolie eingelegt ist.
2. Kraftfahrzeugscheibe, insbesondere heizbare Kraftfahrzeug-Heckscheibe, aus thermoplastischem Material, dadurch gekennzeichnet, dass wenigstens bereichsweise zumindest eine Schutzfolie auf dem thermoplastischen Material aufgebracht ist, und dass das thermoplastische Material mit stromleitendem Material versehen ist, das bei Stromdurchgang die Schutzfolie und/oder das thermoplastische Material erwärmt.
3. Kraftfahrzeugscheibe, insbesondere heizbare Kraftfahrzeug-Heckscheibe, aus thermoplastischem Material, dadurch gekennzeichnet, dass auf dem thermoplastischen Material wenigstens ein Heizleitersystem aufgedruckt oder anderweitig aufgebracht ist, und dass das Heizleitersystem mit einem Schutzlack versiegelt ist.
4. Schutzfolie, gekennzeichnet entsprechend den Merkmalen gemäß den vorstehenden Punkten 1. oder 2.
5. Aufdruck, gekennzeichnet entsprechend den Merkmalen gemäß dem vorstehenden Punkt 3.
6. Scheiben und Platten mit einem Oberflächenschutz hauptsächlich aus Folien oder Schutzlack, gekennzeichnet durch die Anwendung der Technologie gemäß einem der vorstehenden Punkte 1. bis 5.
7. Herstellungsverfahren für eine Kraftfahrzeugscheibe, insbesondere heizbare Kraftfahrzeug-Heckscheibe, aus thermoplastischem Material, dadurch gekennzeichnet, dass wenigstens bereichsweise zumindest eine Schutzfolie auf dem thermoplastischen Material aufgebracht wird, und dass wenigstens ein Heizleiter und/oder eine Antenne auf die Schutzfolie aufgedruckt oder aufgebracht wird oder in die Schutzfolie eingelegt wird.
8. Herstellungsverfahren für eine Kraftfahrzeugscheibe, insbesondere heizbare Kraftfahrzeug-Heckscheibe, aus thermoplastischem Material, dadurch gekennzeichnet, dass wenigstens bereichsweise zumindest eine Schutzfolie auf dem thermoplastischen Material aufgebracht wird, und dass das thermoplastische Material mit stromleitendem Material versehen wird, das bei Stromdurchgang die Schutzfolie und/oder das thermoplastische Material erwärmt.
9. Herstellungsverfahren für eine Kraftfahrzeugscheibe, insbesondere heizbare Kraftfahrzeug-Heckscheibe, aus thermoplastischem Material, dadurch gekennzeichnet, dass auf dem thermoplastischen Material wenigstens ein Heizleitersystem aufgedruckt oder anderweitig aufgebracht wird, und dass das Heizleitersystem mit einem Schutzlack versiegelt wird.
10. Herstellungsverfahren für eine Schutzfolie, gekennzeichnet entsprechend den Merkmalen gemäß den vorstehenden Punkten 7. oder 8.
11. Herstellungsverfahren für einen Aufdruck, gekennzeichnet entsprechend den Merkmalen gemäß dem vorstehenden Punkt 9.
12. Herstellungsverfahren für Scheiben und Platten mit einem Oberflächenschutz hauptsächlich aus Folien oder Schutzlack, gekennzeichnet durch die Anwendung der Technologie gemäß einem der vorstehenden Punkte 7. bis 11.

Anhand der nachfolgend beschriebenen und in den Zeichnungen dargestellten Ausführungs- und Anwendungsbeispiele wird die Erfindung näher erläutert. Verfahrens- und Vorrichtungsmerkmale ergeben sich jeweils analog auch aus Vorrichtungs- bzw. Verfahrensbeschreibungen.

### Alternative 1:

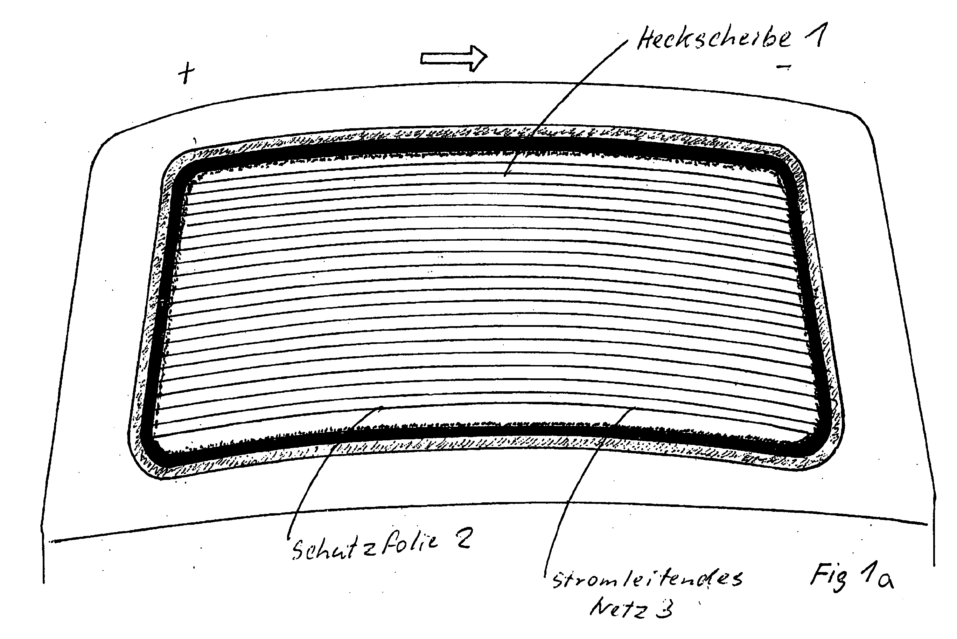

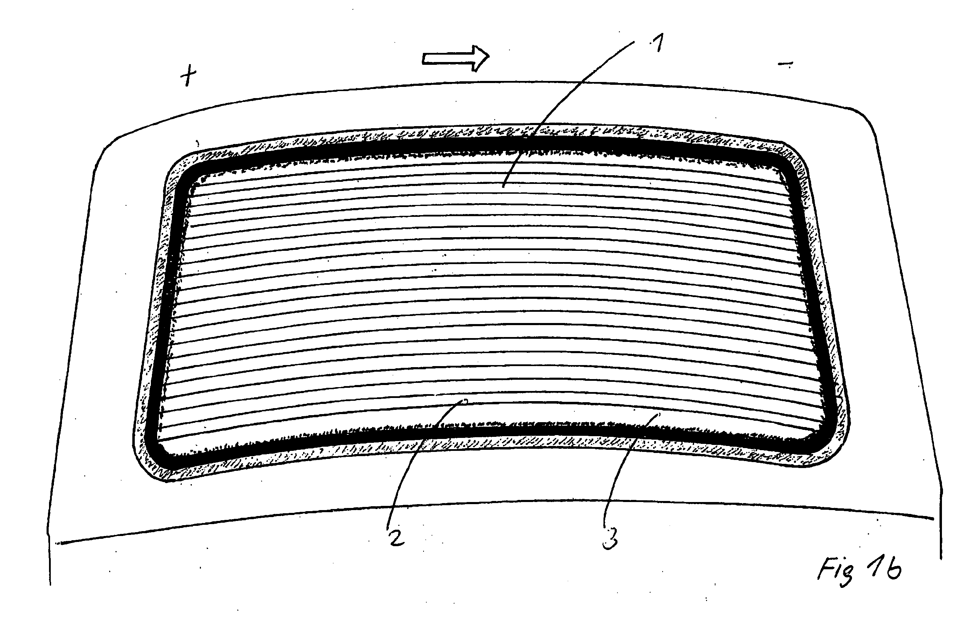

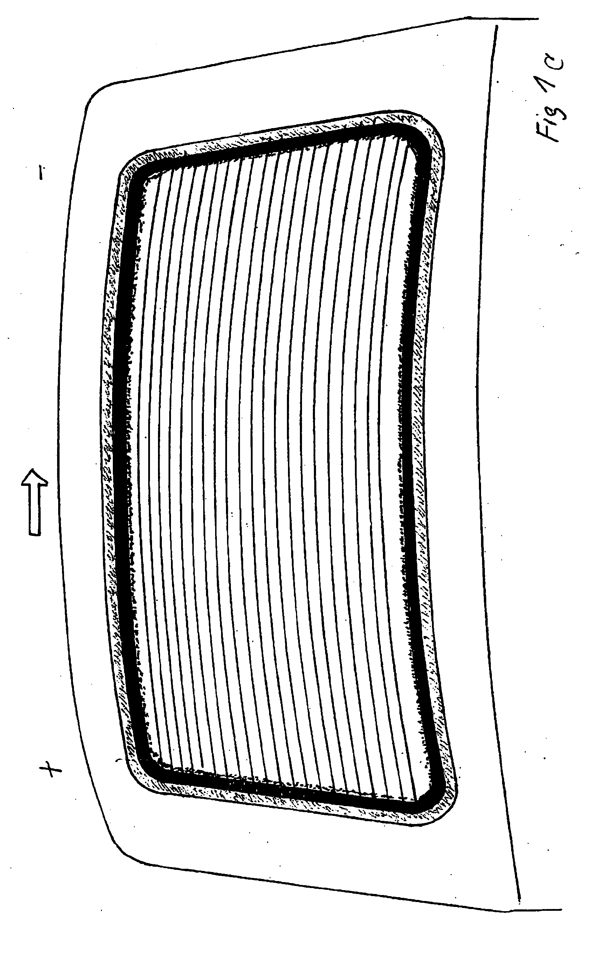

Die äußere Folie, die üblicherweise mit randabdeckenden Drukken versehen wird, wird ergänzt mit einem Druck aus stromleitendem Material, das sich bei Stromdurchgang erhitzt und die Scheibe abtaut. Dieses Verfahren ist bei Glasscheiben bekannt, nicht aber für einen Druck auf Folien (Fig. 1), insbesondere auf thermoplastischem Material.

### Alternative 2:

Eine aus Widerstandsleitern gefertigte Matte wird zwischen eine Thermoplastscheibe und eine Kratz- und UV-Schutzfolie eingeklebt, um bei Stromzufuhr warm zu werden (Fig. 1a, b, c).

### Alternative 3:

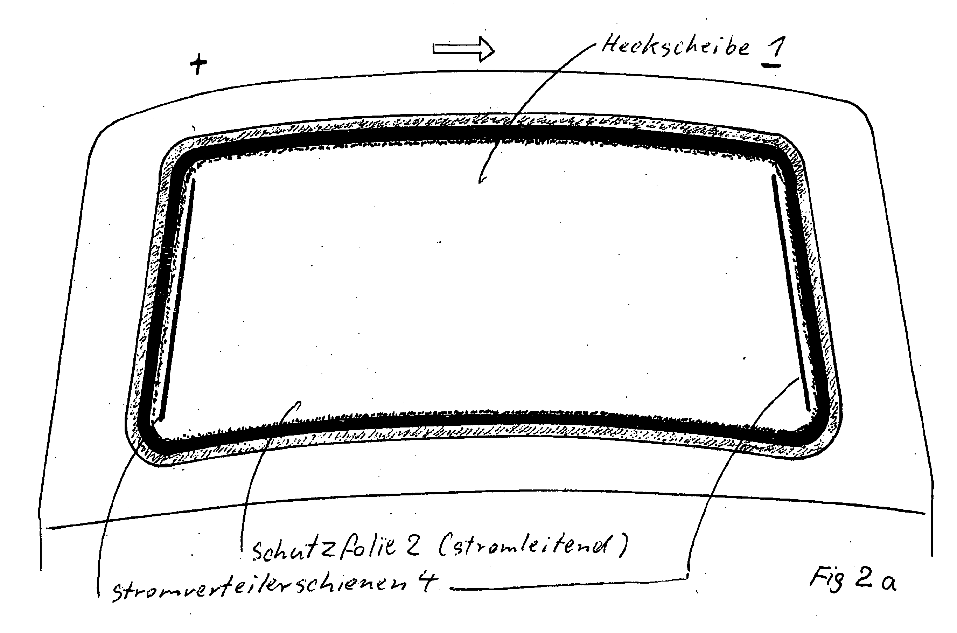

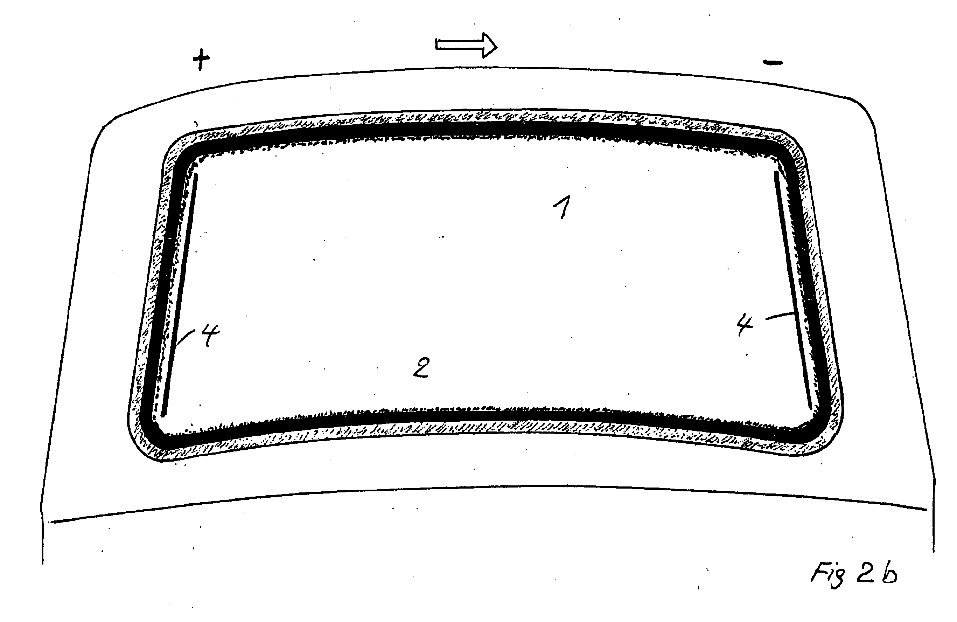

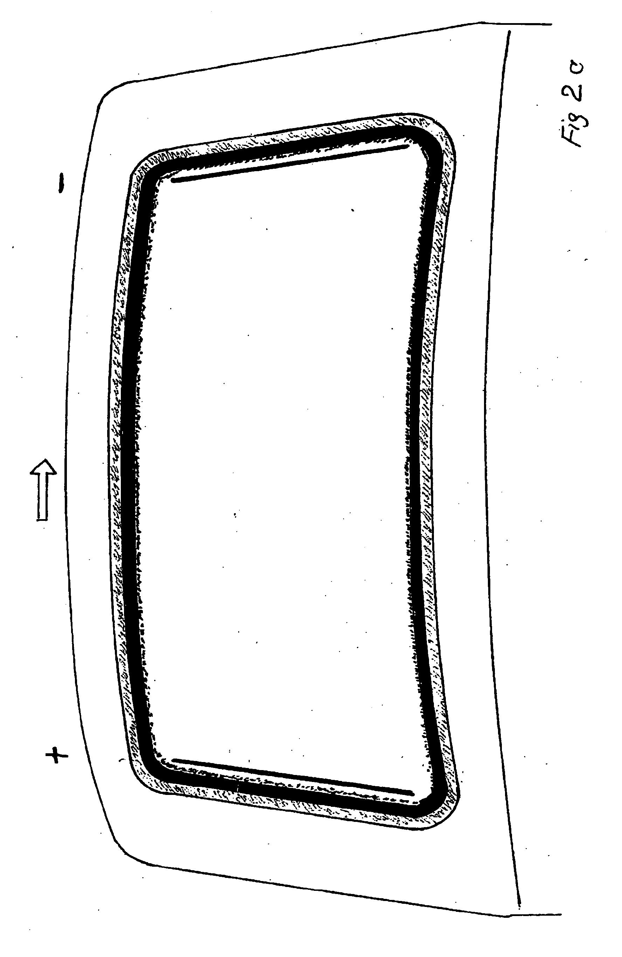

Die Kratz- und UV-Schutzfolie wird aus einem Thermoplast gefertigt, dem stromleitende "Partikel" beigefügt sind, die sich bei Stromdurchgang erwärmen. Stromverteilerleisten "+" und "-" sind gegenüber an den Rändern der Scheibe angebracht (Fig. 2).

### Alternative 4:

Statt das stromleitende und sich erwärmende Material auf die Schutzfolien aufzudrucken, kann dieses Material auch auf die thermoplastischen Scheiben aufgedruckt werden, um dann von einem Schutzlack kratzfest und alterungsbeständig versiegelt zu werden.

### Alternative 5:

Die gleiche Technik ist sinnvoll realisierbar für Scheibenantennen, elektrische Leitungen und weitere Leitungen, die integrales Teil von Scheiben oder Platten sein sollen.

Die thermoplastischen Materialien können alternativ aus anderen Materialien z.B. Zweikomponentenmaterialien bestehen, solange sie nur ganz oder teilweise durchsichtig sind.

Diese Technik ist ebenso anwendbar für jede andere Art von Scheiben und Platten, bei denen eine Erwärmung gewünscht wird.

Die heizbare Heckscheibe bei thermoplastischen Heckscheiben und andere "Plattenheizanwendungen" sowie "Plattenheizproblemlösungen" und die Aufbringung von Antennen sind in vorteilhafter Weise effektiv und kostengünstig machbar.

Bevorzugte und/oder vorteilhafte Ausgestaltungen der Erfindung ergeben sich aus den Ansprüchen und deren Kombinationen sowie den gesamten vorliegenden Anmeldungsunterlagen.

Die Erfindung wird anhand von Ausführungsbeispielen nachfolgend unter Bezugnahme auf die Zeichnungen näher erläutert, in denen
- Fig. 1a, b, c: eine schematische Draufsicht auf ein erstes Ausführungsbeispiel einer heizbaren Fahrzeug-Heckscheibe, und
- Fig. 2a, b, c: eine schematische Draufsicht auf ein zweites Ausführungsbeispiel einer heizbaren Fahrzeug-Heckscheibe.

Anhand der nachfolgend beschriebenen und in den Zeichnungen dargestellten Ausführungs- und Anwendungsbeispiele wird die Erfindung lediglich exemplarisch näher erläutert.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

In den Figuren der Zeichnung sind folgende Teile mit den entsprechenden Bezugszeichen versehen:
- 1: Heckscheibe
- 2: Schutzfolie
- 3: stromleitendes Netz
- 4: Stromverteilerschienen

Die Fig. 1a, b und c zeigen als Beispiel eine Heckscheibe 1 aus Thermoplast, deren Schutzfolie 2 mit einem stromleitenden Netz 3 bedruckt ist und sich damit erwärmt.

Die Fig. 2a, b und c zeigen als Beispiel eine Heckscheibe 1 aus Thermoplast, deren Schutzfolie 2 aus stromleitenden Material und damit sich erwärmt. Seitlich sind die Stromverteilerschienen 4 aufgedruckt.

Bei einem Herstellungsverfahren werden beispielsweise an aufeinander folgenden Stationen
- ein transparenter thermoplastischer Träger hergestellt,
- dieser bedruckt,
- dann ein weiterer transparenter thermoplastischer Träger darüber gespritzt und schließlich die fertige Scheibe ausgegeben.

### Dieses Verfahren läßt sich z.B. an einer Maschine durchführen, die vier Stationen hat:

An einer ersten Station wird der transparente thermoplastische Träger hergestellt. Dann wird dieses Teil z.B. mit einer 90°-Drehung zu einer zweiten Station befördert, wo dieser transparente thermoplastische Träger bedruckt wird. Beispielsweise wiederum unter einer 90°-Drehung zu einer dritten Station wird dann ein weiterer transparenter thermoplastischer Träger darüber gespritzt. Direkt aus dieser Station oder nach einer erneuten 90°-Drehung zu einer vierten Station wird dann das fertige Teil ausgegeben. Zum Verständnis ist dieser Fertigungsprozess so zu erläutern, dass die einzelnen Bearbeitungsschritte an einer Seite eines Würfels durchgeführt werden, der durch die besagten 90°-Drehungen diese Seite schrittweise von einer Station zur nächsten bewegt.

Die Erfindung ist anhand der Ausführungsbeispiele in der Beschreibung und in den Zeichnungen lediglich exemplarisch dargestellt und nicht darauf beschränkt, sondern umfaßt alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen und mit seinem fachmännischen Wissen sowie dem Stand der Technik kombinieren kann. Insbesondere sind alle einzelnen Merkmale und Ausgestaltungsmöglichkeiten der Erfindung und ihrer Ausführungsbeispiele kombinierbar.

## Patentansprüche

1. Kraftfahrzeugscheibe, insbesondere heizbare Kraftfahrzeug-Heckscheibe, aus thermoplastischem Material,
**dadurch gekennzeichnet, dass** wenigstens bereichsweise zumindest eine Schutzfolie auf dem thermoplastischen Material aufgebracht ist, und
- dass wenigstens ein Heizleiter und/oder eine Antenne auf die Schutzfolie aufgedruckt oder aufgebracht ist oder in die Schutzfolie eingelegt ist, oder
- dass das thermoplastische Material mit stromleitendem Material versehen ist, das bei Stromdurchgang die Schutzfolie und/oder das thermoplastische Material erwärmt.

2. Kraftfahrzeugscheibe, insbesondere heizbare Kraftfahrzeug-Heckscheibe, aus thermoplastischem Material, **dadurch gekennzeichnet, dass** auf dem thermoplastischen Material wenigstens ein Heizleitersystem aufgedruckt oder anderweitig aufgebracht ist, und dass das Heizleitersystem mit einem Schutzlack versiegelt ist.

3. Schutzfolie, **gekennzeichnet** entsprechend den Merkmalen gemäß dem Anspruch 1.

4. Aufdruck, **gekennzeichnet** entsprechend den Merkmalen gemäß dem Anspruch 3.

5. Scheiben und Platten mit einem Oberflächenschutz hauptsächlich aus Folien oder Schutzlack, **gekennzeichnet durch** die Anwendung der Technologie gemäß einem der Ansprüche 1 bis 4.

6. Herstellungsverfahren für eine Kraftfahrzeugscheibe, insbesondere heizbare Kraftfahrzeug-Heckscheibe, aus thermoplastischem Material,
**dadurch gekennzeichnet, dass** wenigstens bereichsweise zumindest eine Schutzfolie auf dem thermoplastischen Material aufgebracht wird, und
- dass wenigstens ein Heizleiter und/oder eine Antenne auf die Schutzfolie aufgedruckt oder aufgebracht wird oder in die Schutzfolie eingelegt wird, oder
- dass das thermoplastische Material mit stromleitendem Material versehen wird, das bei Stromdurchgang die Schutzfolie und/oder das thermoplastische Material erwärmt.

7. Herstellungsverfahren für eine Kraftfahrzeugscheibe, insbesondere heizbare Kraftfahrzeug-Heckscheibe, aus thermoplastischem Material, **dadurch gekennzeichnet, dass** auf dem thermoplastischen Material wenigstens ein Heizleitersystem aufgedruckt oder anderweitig aufgebracht wird, und dass das Heizleitersystem mit einem Schutzlack versiegelt wird.

8. Herstellungsverfahren für eine Schutzfolie, **gekennzeichnet** entsprechend den Merkmalen gemäß dem Anspruch 7.

9. Herstellungsverfahren für einen Aufdruck, **gekennzeichnet** entsprechend den Merkmalen gemäß dem Anspruch 8.

10. Herstellungsverfahren für Scheiben und Platten mit einem Oberflächenschutz hauptsächlich aus Folien oder Schutzlack, **gekennzeichnet durch** die Anwendung der Technologie gemäß einem der Ansprüche 6 bis 9.
